# FASCICULE DE BREVET EUROPEEN

(11) **EP 1 785 214 B1**
(45) Date de publication et mention de la délivrance du brevet: **18.02.2015**
(21) Numéro de dépôt: 06124100.6
(22) Date de dépôt: 15.11.2006
(51) Int. Cl.: B23K 26/34, F01D 5/20

(54) **Procédé de réalisation d' un rebord situé à l' extrémité libre d' une aube, aube obtenue par ce procédé et turbomachine équipée de cette aube**
Verfahren zur Herstellung eines Flansches am freien Ende einer Turbinenschaufel, durch diesem Verfahren hergestellte Turbinenschaufel sowie eine mit solcher Turbinenschaufel versehene Turbomaschine
Method for creating a flange at the free end of a turbine blade, turbine blade obtained by the method and turbomachine equipped with said turbine blade

(30) Priorité: 15.11.2005 FR 0511578
(43) Date de publication de la demande: 16.05.2007
(73) Titulaire: SNECMA, 75015 Paris (FR)
(72) Inventeur: Mons, Claude, 77176 Savigny le Temple (FR); Vigneau, Joël, 91750 Champcueil (FR)
(74) Mandataire: Intès, Didier Gérard André

(56) Documents cités:
- DE-A1-102004 001 722
- DE-A1-102004 002 551
- US-A- 5 038 014
- US-A- 5 160 822
- US-A1- 2001 008 230

## Description

L'invention concerne un procédé de réalisation d'au moins un rebord situé à l'extrémité libre d'une aube, l'aube obtenue par ce procédé et la turbomachine équipée d'une telle aube.

La présente invention porte aussi bien sur un premier type d'aubes dont l'extrémité libre est pourvue de plusieurs rebords, en général deux rebords, parallèles entre eux, formant chacun une léchette, que sur un deuxième type d'aubes creuses pourvues à leur extrémité libre d'une cavité ouverte ou « baignoire » bordée par ce rebord.

A titre illustratif, le document WO 02/097241 illustre une aube de ce premier type et le document FR 2 858 650 illustre une aube de ce deuxième type.

US-A-5 160 822 décrit:
Un procédé de réalisation d'au moins un rebord situé à l'extrémité libre d'une aube de rotor d'un moteur de turbine a gaz, comportant des étapes suivantes:
   I) on fournit une aube présentant à son extrémité libre au moins une base de rebord,
   II) on fournit au moins une source d'un matériau en poudre et une buse de projection reliée à ladite source et apte à se déplacer par rapport à ladite aube,
   III) on fournit une source laser reliée à une tête optique apte à se déplacer par rapport à ladite aube pour focaliser le faisceau laser sur un point de la surface de ladite base de rebord,
   IV) on règle la tête optique et la buse sur un même point de la surface du sommet de la base de rebord,
   V) on active la source laser et la source de matériau en poudre, ce par quoi on forme un bain de fusion localisé au niveau dudit point, dans lequel est injecté le matériau en poudre d'où il résulte la formation d'une surépaisseur localisée,
   VI) on règle la tête optique et la buse sur un autre point de la surface du sommet de la base adjacent à ladite surépaisseur localisée et on répète l'étape V) jusqu'à la formation d'une couche sur sensiblement toute la largeur du sommet de la base,
   VII) on construit au moins une portion du dit rebord par le dépôt successif de couches sur le sommet de la base, chaque couche résultant de la réalisation des tapes IV) à VI).

US-A-5 160 822 décrit aussi l'aube obtenu par ce procédé et une turbomachine comprenant une telle aube.

Ces rebords ont pour fonction de limiter les surfaces en regard entre l'extrémité de l'aube et la surface annulaire correspondante du carter de turbine ou de compresseur, afin de protéger le corps de l'aube contre les dégâts causés par le contact éventuel avec un segment annulaire, tout en assurant une étanchéité entre le rotor et le stator.

Cette fonction d'étanchéité à l'extrémité des aubes est très importante puisque qu'elle conditionne les performances de la turbomachine, que ce soit pour l'efficacité d'un étage de turbine ou d'un compresseur équipé d'aubes mobiles. En effet, suivant les conditions de fonctionnement de la turbomachine, il existe des phénomènes d'instabilité ayant pour effet de faire diminuer le rendement de la turbomachine et/ou d'entraîner des surcharges mécaniques ou thermiques des aubes.

De plus, il existe un jeu entre le sommet des aubes et le stator. L'ensemble de cette situation conduit, en fonctionnement, à la présence de frottements entre les aubes et le stator, ce qui peut entraîner des détériorations au niveau des extrémités des aubes et/ou de la surface du stator, d'où une variation possible du jeu précité. En outre, d'une part le rotor et le stator qui lui est concentrique n'ont pas des formes strictement parfaitement circulaires et les variations de dilatation thermique différentielle ainsi que la déformation mécanique provenant des contraintes qui s'exercent modifient les dimensions de ces pièces.

Pour diminuer ces frottements tout en garantissant l'étanchéité nécessaire, on utilise des garnitures d'étanchéité et d'usure formées de couronnes en matériaux « abradables » disposées sur les surfaces internes du stator en regard des aubes mobiles. Ceci signifie que les garnitures d'étanchéité du stator vont s'user ou s'abraser en fonction du passage des aubes jusqu'à s'accommoder avec les formes de ces dernières. Dans ce cas, les aubes sont munies de rebords formant des léchettes sur la périphérie radialement externe, qui sont destinés à coopérer avec les garnitures abradables, ces rebords présentant eux-même la forme d'éléments profilés, de formes variées, en matériau abrasif.

Pour les aubes du deuxième type, le rebord ne se présente pas sous la forme de plusieurs léchettes mais d'un rebord, en général, continu délimitant une cavité ouverte à l'extrémité libre de l'aube, le rebord en question jouant cependant le même rôle.

Habituellement, ces rebords sont fabriqués par fonderie simultanément avec le reste de l'aube, puis ils sont rectifiés par usinage pour leur donner leur forme définitive.

En outre, pour éviter les détériorations, voir les destructions, des rebords, surtout lorsqu'on se trouve dans un compresseur ou une turbine haute pression, on peut revêtir ceux-ci par projection thermique (torche à plasma, à flamme oxygène à haute vitesse HVOF, ...) d'un dépôt abrasif par exemple de type alumine/bioxyde de titane ou carbure, par exemple sur une sous-couche d'alliage aluminium, de chrome et de nickel, pour en assurer l'adhérence.

Le dépôt par projection thermique est une technique lourde et qui requiert de respecter des angles relatifs de projection entre l'axe de la torche et les surfaces des pièces à revêtir, de manière à ce que l'impact des particules projetées soit le plus orthogonal possible par rapport à la surface à revêtir afin d'obtenir une qualité et une adhérence du dépôt satisfaisantes.

Par ailleurs, dans le cas du dépôt d'un revêtement, les gaz propulseurs ou plasmagènes utilisés pour la projection doivent pouvoir être aisément évacués sans toutefois «souffler» la poudre projetée en créant des turbulences.

La présente invention a pour but de surmonter ces inconvénients en proposant une solution qui permette de s'affranchir de la formation du ou des rebords par fonderie, ce qui simplifie les outillages de fonderie et évite le rebut de certaines pièces sortant de cette étape de fonderie.

Ce but de l'invention est atteint par le procédé comme définit dans la revendication 1.

On comprend de ce qui précède qu'il est proposé de remplacer la formation du rebord par fonderie, ainsi que l'éventuel dépôt par projection thermique d'un revêtement abrasif sur la surface du rebord réalisé, par une construction complète de ce rebord, ou tout du moins une partie de la hauteur de la partie saillante que forme ce rebord, en ayant recours à une projection laser.

La projection laser consiste à créer sur la pièce un bain de fusion très localisé, par action d'un faisceau laser pouvant être réglé de façon très précise, et à injecter dans ce bain de fusion de la poudre (métallique et/ou céramique), qui peut être abrasive. Ainsi, contrairement à la projection thermique, il n'est pas nécessaire de chauffer la poudre, sa trajectoire pouvant donc être dissociée de celle du faisceau laser.

Le faisceau laser se propage depuis sa source jusqu'à la cible par un chemin optique. Ce chemin optique est matérialisé soit pas une succession de miroirs qui reçoivent le faisceau et le renvoient dans une direction différente et de lentilles optiques et qui le font converger ou diverger ou le maintiennent parallèles, soit par une fibre optique.

Dans les deux cas, le chemin optique se termine par un système de lentilles appelées « tête optique » qui fait converger le faisceau en un point plus ou moins éloigné. Le dispositif à projection laser permet une très grande souplesse d'utilisation dès lors qu'il n'y a pas d'obstacle entre la tête optique et le point d'impact visé par le faisceau sur la pièce. En effet, dans le cas d'une projection thermique, il est nécessaire que la poudre arrive avec une direction d'impact normale à la surface à revêtir. De façon tout à fait différente, avec le procédé proposé selon la présente invention, la projection laser ne nécessitant que le remplissage du bain de fusion, la poudre peut être envoyée avec des trajectoires tout à fait variables par rapport à la surface de réception.

La poudre métallique est distribuée par un distributeur de poudre. Elle chemine dans un tube dont l'extrémité comporte une buse qui dirige la poudre vers le bain de fusion créé par le faisceau laser. Ce tube peut être souple et guidé par un bras rigide support ou par un robot ou tout autre dispositif de positionnement, ou bien il peut être rigide et orienté vers la zone à revêtir de la pièce.

On peut relever d'autres avantages du procédé de projection laser.

Dans le cas de la projection thermique, la buse transmettant les gaz chauds doit être proche de la surface à revêtir, tandis que dans le cas de la projection laser, la tête optique peut être relativement éloignée de cette surface. Dans le cas de la projection thermique, la poudre doit être chauffée de sorte qu'elle doit présenter une trajectoire commune avec les gaz chauds, ce qui n'est pas le cas avec une projection laser dans laquelle la trajectoire de la poudre peut être dissociée de celle du faisceau laser.

En outre, dans le cas de la projection thermique, on réalise un procédé de revêtement continu alors que dans le cas d'une projection laser, compte tenu de la souplesse de commande du faisceau laser, il est possible de réaliser la projection de façon continue ou de façon séquentielle, par un simple arrêt du faisceau laser.

En outre, on comprend que la solution conforme à la présente invention évite d'avoir à usiner le rebord issu de fonderie, qui est un emplacement relativement délicat à réaliser. En effet, grâce au procédé conforme à la présente invention, on construit simultanément, couche par couche, le rebord, ainsi, le cas échéant, que son revêtement avec un matériau suffisamment abrasif.

À cet égard, il faut noter que ce procédé peut réaliser la construction du rebord sur toute sa hauteur (dans ce cas, la base de rebord est simplement un emplacement de l'extrémité libre de l'aube) ou bien uniquement la construction du rebord sur une partie de sa hauteur formant son extrémité ou sa pointe (dans ce cas, la base de rebord est un rebord de faible hauteur, formant un moignon à l'extrémité libre de l'aube, et qui provient de l'étape de fonderie et de l'éventuelle étape de rectification par usinage).

Dans l'étape e) l'activation de la source laser et de la source de matériau en poudre est effectuée successivement ou quasi simultanément afin que le bain de fusion localisé soit présent à l'emplacement sur lequel est dirigé le faisceau laser lorsque la poudre, qui arrive sur ce même emplacement, vient impacter cette surface.

En outre, du fait de la très grande souplesse d'utilisation de cette technique de projection laser, ce ou ces rebords peuvent être réalisés dans un matériau choisi différent de celui de l'aube, en tout ou partie.

De plus, on comprend qu'on s'affranchit de la réalisation éventuelle d'un dépôt de revêtement par projection thermique afin de pouvoir tout de même réaliser des rebords qui ne soient pas endommagés par leur contact avec le stator et l'éventuelle couronne d'abradable.

De préférence, on réalise les étapes d) à f) tant que toute la surface du sommet de la base de rebord n'est pas revêtue d'une couche et pendant l'étape g) on construit le rebord par le dépôt successif de couches sur toute la surface du sommet de la base de rebord, chaque couche résultant de la réalisation des étapes d) à f). On peut prévoir de déposer successivement des couches de plus en plus étroites en direction transversale à la paroi d'extrados et/ou d'intrados.

En effet, il est préférable de construire le rebord strate par strate, en réalisant en premier lieu une nouvelle couche sur toute la surface du sommet de la base de rebord avant de continuer cette construction radialement plus à l'extérieur.

Néanmoins, on peut concevoir d'autres méthodes de construction, parmi lesquels la construction couche par couche d'un secteur du rebord avant de poursuivre la construction d'un autre secteur du rebord, ou encore, au moyen de plusieurs têtes optiques et de plusieurs buses, la fabrication simultanée de plusieurs secteurs du rebord.

De préférence, pendant l'étape f), on parcourt la surface du sommet de la base de rebord selon une direction transversale à la paroi d'intrados et/ou d'extrados avant de se décaler en direction longitudinale qui s'étend entre le bord d'attaque et le bord de fuite.

Dans ce cas, on construit chaque couche ligne par ligne en déplaçant, le long de cette ligne, le réglage de la tête optique et de la buse (ou en déplaçant l'extrémité de l'aube par rapport à l'appareillage de projection laser) parallèlement à la direction transversale à la paroi d'intrados et/ou d'intrados, avant d'effectuer un décalage en direction longitudinale de l'extrémité de l'aube et de commencer une nouvelle ligne jusqu'à la fin de la réalisation d'une couche.

Bien entendu, on peut concevoir d'autres trajectoires de déplacement pour construire chaque couche, par exemple en fabricant à la suite les uns des autres, des cordons de matière qui seront décalés légèrement en direction transversale les uns par rapport aux autres.

Selon une autre disposition préférentielle, au cours de l'étape f) la source laser et la source de matériau en poudre restent activées.

De cette façon, on peut réaliser en continu la construction du rebord par formation d'îlots successifs de matière, soit pour la formation complète du rebord, soit par des séquences correspondant chacune à la fabrication d'une partie (par exemple une couche complète du rebord). Alternativement ou en combinaison avec ces différentes possibilités, on peut également, notamment dans les zones les plus délicates à atteindre et/ou les plus fines au niveau des dimensions, réaliser un dépôt de matière point après point en désactivant la source laser et la source de matériau au cours de l'étape f).

L'invention concerne aussi une aube de rotor d'un moteur à turbine à gaz comportant au moins un rebord situé à l'extrémité libre, où le rebord est obtenu par le procédé conforme à la présente invention présenté précédemment.

Comme il ressort de l'exposé ci-dessus du procédé conforme à l'invention, il faut comprendre que ce rebord est fabriqué entièrement (sur toute sa hauteur) ou seulement en partie, à savoir sa partie d'extrémité constituant le sommet, par ce procédé.

Dans le dernier cas, la partie radialement intérieure du rebord est formée d'une base préalablement réalisée par fonderie avec le reste de l'aube.

En particulier, cette aube fait partie du rotor d'un compresseur basse pression ou haute pression ou d'une turbine basse pression ou haute pression d'une turbomachine.

Egalement, la présente invention porte sur une turbomachine comprenant une aube de rotor du type cité précédemment.

D'autres avantages et caractéristiques de l'invention ressortiront à la lecture de la description suivante faite à titre d'exemple et en référence aux dessins annexés dans lesquels :
- la figure 1 est une vue en perspective d'une aube du premier type;
- la figure 2 est une vue en perspective d'une aube du deuxième type ;
- la figure 3 montre en perspective, de manière agrandie, l'extrémité libre de l'aube de la figure 2,
- la figure 4 est une vue simplifiée selon la direction IV de la figure 3, de l'extrémité libre de l'aube.
- la figure 5 est une vue analogue à celle de la figure 3, après que le bord de fuite de l'aube ait été retiré par une coupe longitudinale,
- la figure 6 est une vue en coupe longitudinale selon la direction VI-VI de la figure 4 ou de la figure 5, et
- la figure 7 est une vue analogue à celle de la figure 4 montrant une variante de réalisation ;
- la figure 8 est une vue analogue à celle de la figure 6 pour la variante de réalisation de la figure 7 ;
- la figure 9 montre une vue analogue à celle de la figure 8 pour une aube conforme à une autre variante de réalisation ;
- la figure 10 est une vue d'extrémité simplifiée similaire à celle de la figure 4 pour une aube combinant différentes formes de rebord pour l'extrémité libre de l'aube ;
- les figures 11 et 12 représentent une vue en coupe axiale schématique partielle et agrandie de l'extrémité libre d'une aube montrant l'évolution de la section transversale et du profil du rebord lors d'une mise en oeuvre du procédé de fabrication conforme à la présente l'invention, et
- la figure 13 est une vue analogue à celle de la figure 11 pour une variante de réalisation du procédé conforme à la présente l'invention.

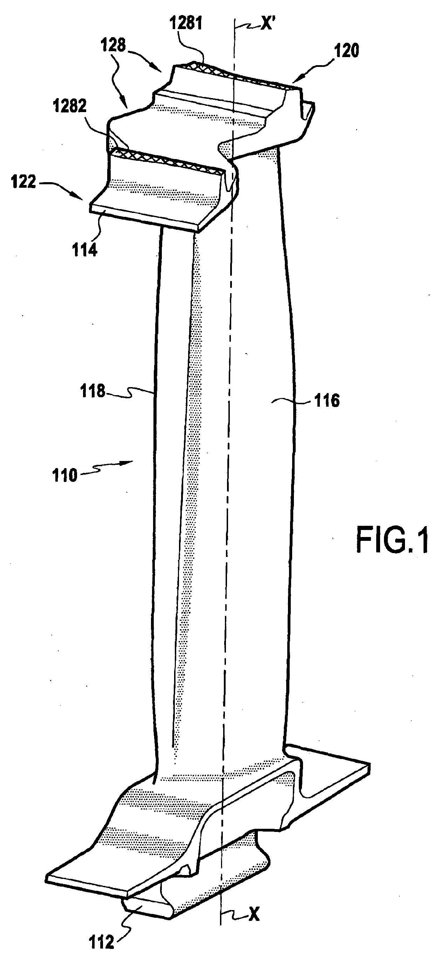

La figure 1 montre une aube 110 de turbomachine du premier type qui comporte un pied d'aube 112 à son extrémité interne et une extrémité libre 114 formant un talon à son extrémité périphérique externe. Cette aube 110 s'étend le long d'une direction radiale le long d'un axe d'aube X-X' favorisant l'écoulement axial, cet axe X-X' étant perpendiculaire à l'axe du rotor sur lequel est montée cette aube 110. Sur sa longueur, l'aube 110 présente un profilé avec une paroi d'intrados 116 et une paroi extrados 118.

Au niveau de son extrémité libre 114, l'aube 110 présente deux léchettes ou rebords 128, respectivement 1281 et 1282, qui s'étendent transversalement par rapport aux parois d'intrados 116 et d'extrados 118 selon une direction sensiblement rectiligne en faisant saillie radialement depuis l'extrémité libre 114. La hauteur des rebords 1281 et 1282 peut aussi bien être identique entre les deux rebords et tout le long de ces rebords, ou bien présenter une hauteur variable, notamment une hauteur supérieure du côté de la paroi d'extrados de manière à former un effet «dents de scie » d'une aube à l'autre. Dans tous les cas, la variation de la hauteur reste faible et ne dépasse par exemple pas 0,2 mm pour éviter une usure du rebord 128.

Ainsi, cette aube 110 du premier type comprend plusieurs rebords 128 (en particulier deux rebords 1281 et 1282) s'étendant entre le bord d'attaque 20 et le bord de fuite 22 et parallèlement entre eux, en formant des léchettes s'étendant en direction longitudinale et qui sont séparées les unes des autres.

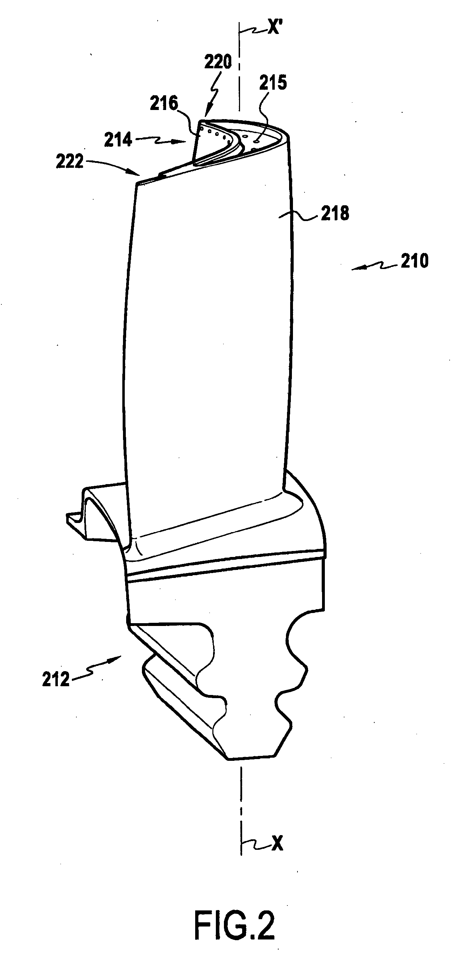

Sur la figure 2 est visible, en perspective, un exemple d'une aube 10 de rotor du deuxième type, en particulier une aube creuse conventionnelle pour une turbine à gaz. De l'air de refroidissement (non représenté) s'écoule à l'intérieur de l'aube depuis le bas du pied 212 de l'aube dans la direction radiale (verticale) vers l'extrémité libre 214 de l'aube (en haut sur la figure 2), puis cet air de refroidissement s'échappe par une sortie pour rejoindre le flux de gaz principal.

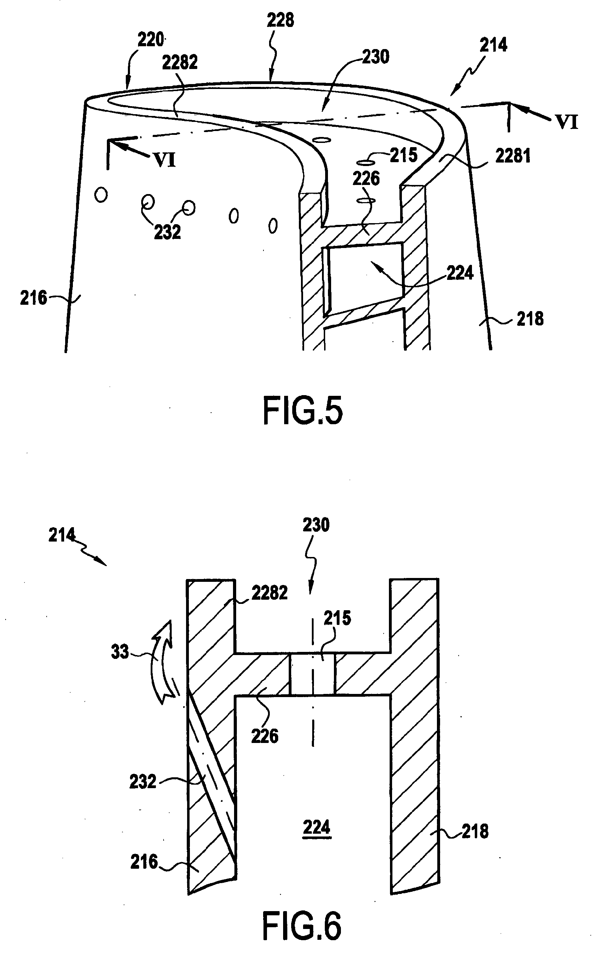

En particulier, comme il ressort des figures 5 à 10, cet air de refroidissement circule dans un passage de refroidissement interne 224 situé à l'intérieur de l'aube 210 et qui aboutit à l'extrémité libre 214 de l'aube au niveau de perçages débouchants 215.

Le corps de l'aube est profilé de sorte qu'il définit une paroi d'intrados 216 (à gauche sur toutes les figures) et une paroi d'extrados 218 (à droite sur toutes les figures). La paroi d'intrados 216 présente une forme générale concave et se présente la première face au flux de gaz chauds, c'est-à-dire du côté pression des gaz, tandis que la paroi d'extrados 218 est convexe et se présente par la suite au flux de gaz chauds, c'est-à-dire du côté aspiration des gaz.

Les parois d'intrados 216 et d'extrados 218 se rejoignent à l'emplacement du bord d'attaque 220 et à l'emplacement du bord de fuite 222 qui s'étendent radialement entre l'extrémité libre 214 de l'aube et le haut du pied 212 de l'aube.

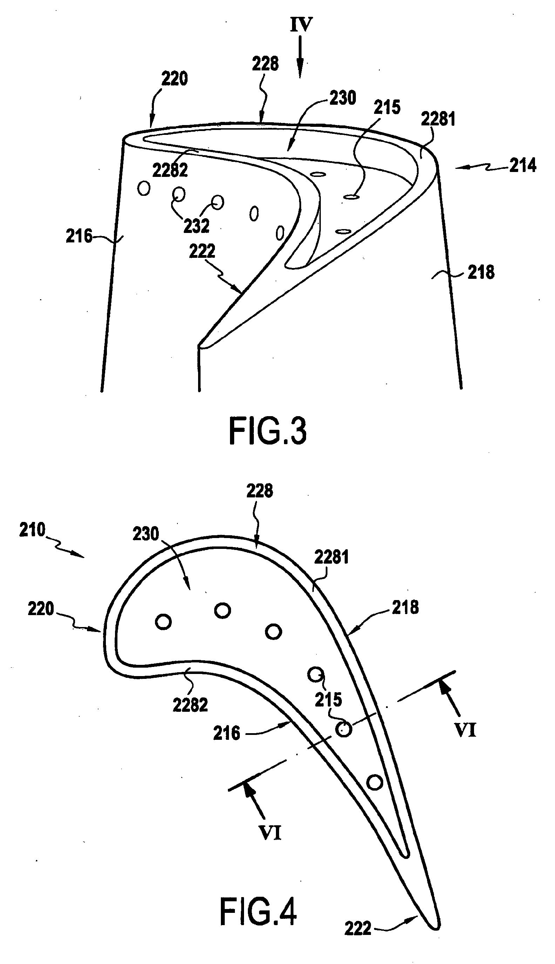

Comme il ressort des vues agrandies des figures 3, 5 et 6, au niveau de l'extrémité libre 214 de l'aube, le passage de refroidissement interne 224 est délimité par une paroi de fond 226 qui s'étend sur toute l'extrémité libre 214 de l'aube, entre la paroi d'intrados 216 et la paroi d'extrados 218, depuis le bord d'attaque 220 jusqu'au bord de fuite 222.

Au niveau de l'extrémité libre 214 de l'aube, les parois d'intrados et d'extrados 216, 218 forment le rebord 228 d'une « baignoire » ou cavité ouverte 230 dans la direction opposée au passage de refroidissement interne 224, soit radialement vers l'extérieur (vers le haut sur toutes les figures).

Les perçages débouchants 215 traversant toute l'épaisseur de la paroi de fond 226, et font communiquer la cavité ouverte 230 avec le passage de refroidissement interne 224.

Ce rebord 228 est formé d'un rebord d'extrados 2281 et d'un rebord d'intrados 2282 prolongeant respectivement radialement vers l'extérieur (vers le haut sur toutes les figures) la paroi d'extrados 218 et la paroi d'intrados 216, au-delà de la paroi de fond 226 et jusqu'à l'extrémité libre 214 de l'aube.

Le rebord 228 forme donc une paroi mince le long du profil de l'aube qui protège l'extrémité libre 214 de l'aube 210, en particulier la paroi de fond 226, du contact avec la surface annulaire correspondante du stator, par exemple le carter de turbine.

Comme on peut le voir plus précisément sur la vue en coupe de la figure 6, des canaux de refroidissement 232 inclinés traversent la paroi d'intrados 216 pour relier le passage de refroidissement interne 224 à la face extérieure de la paroi d'intrados 216, en dessous de la face extérieure du rebord d'intrados 2282.

Ces canaux de refroidissement 232 sont inclinés de façon à ce qu'ils débouchent en direction du sommet du rebord d'intrados 2282 afin de refroidir autant que possible ce sommet (flèche 33 sur la figure 6), le long de la paroi d'intrados 16, ou plus précisément le long de la face extérieure du rebord d'intrados 2282.

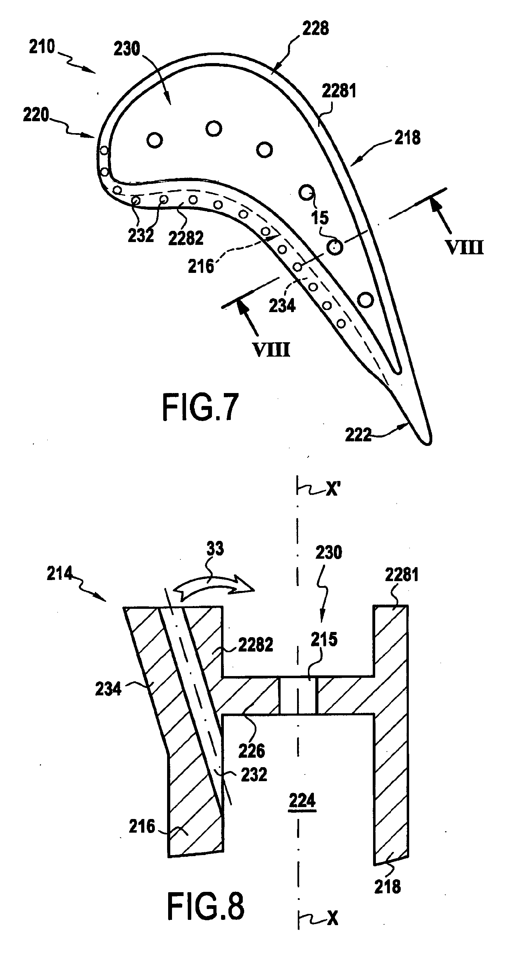

Selon une variante visible sur les figures 7 et 8, la paroi d'intrados 216 présente une portion d'extrémité 234 en saillie dont la face extérieure est inclinée par rapport à la face extérieure de la paroi d'intrados 216, les canaux de refroidissement 235 étant disposés à travers cette portion d'extrémité 34. Selon cette variante des figures 7 et 8, le rebord d'intrados 2282 est en saillie transversalement vers l'extérieur à l'emplacement de la portion d'extrémité 234 de la paroi d'intrados 216, de sorte que la face extérieure du rebord d'intrados 2282 est inclinée et forme un angle aigu avec la direction radiale (verticale sur la figure 8) ou l'axe X-X' de la face extérieure du reste de la paroi d'intrados 216, cet angle étant de préférence compris entre 0 et 45°, en particulier entre 10 et 35°, avantageusement entre 15 et 30°, et de préférence de l'ordre de 30°.

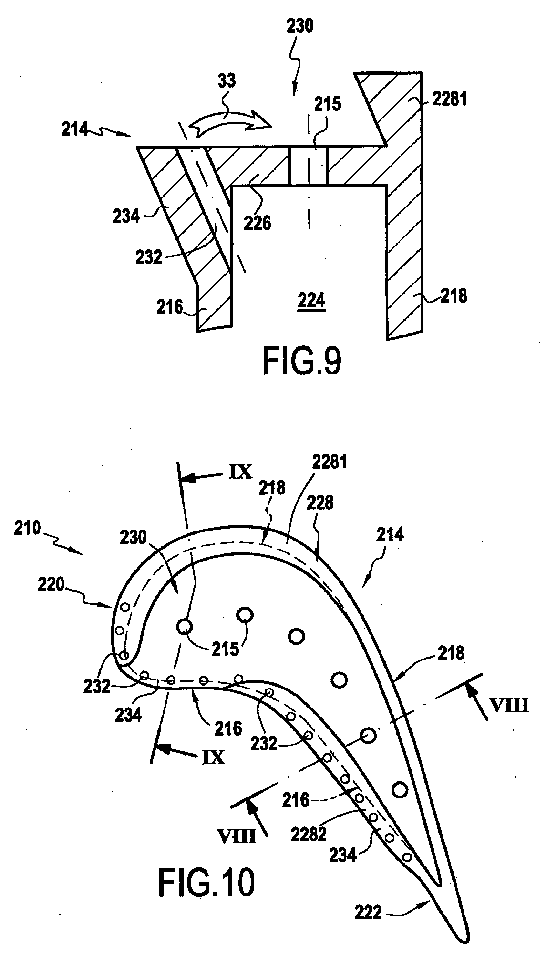

On se reportera maintenant à la figure 9 qui représente une autre variante, selon laquelle la paroi d'intrados 216 ne comporte plus de rebord d'intrados 2282. Selon cette variante, le sommet de la portion d'extrémité 234 est orthogonale aux parois d'intrados 216 et d'extrados 218, selon une direction parallèle au sommet du rebord d'extrados 2281, en prolongeant la surface extérieure de la paroi de fond 226.

En outre, le rebord d'extrados 2281 présente une face intérieure, tournée en direction de la paroi d'intrados 216 et faisant face à la cavité ouverte 230, s'étendant de façon inclinée, en formant un angle aigu, autrement dit inférieur à 90°, avec la face extérieure de la paroi de fond 226. Dans ce cas, le rebord d'extrados 2281 est donc plus large au niveau de son sommet.

Il faut noter que les différentes variantes illustrées et décrites précédemment peuvent se combiner entre elles.

Ainsi, par exemple, la figure 10 illustre l'extrémité libre 214 d'une aube du deuxième type 210 qui présente plusieurs configurations de rebord entre son bord d'attaque 220 et son bord de fuite 222 :
- à l'avant de l'aube, en aval du bord d'attaque 220, on retrouve la conformation de la figure 9 avec une portion d'extrémité 234 en saillie transversale côté paroi d'intrados 216, sans rebord d'intrados et avec un rebord d'extrados 2281 élargi à son sommet;
- à l'arrière de l'aube, en amont du bord de fuite 22, on retrouve la disposition de la figure 8 avec, du côté de la paroi d'intrados 216, une portion d'extrémité 234 en saillie transversale comprenant le rebord d'intrados 2282 élargi à son sommet, et du côté de la paroi d'extrados 218, un rebord d'extrados 2281 non élargi à son sommet.

Ainsi, cette aube 210 du deuxième type (avec « baignoire ») est creuse et comprend un passage de refroidissement interne 224, une cavité 230 ouverte située à l'extrémité libre 214 de l'aube 210, et une paroi de fond 226 s'étendant sur toute l'extrémité 214 de l'aube, en séparant ledit passage de refroidissement interne 224 de la cavité ouverte 230, ladite paroi de fond 226 présentant, à la sortie de l'étape de fonderie, une base de rebord sur laquelle le rebord 2281 est construit par projection laser, couche après couche.

Dans le cas des aubes du premier type et du deuxième type, et du procédé de réalisation du rebord conforme à la présente invention, l'une ou les deux dispositions suivantes est (sont) de préférence adoptée(s) :
- le rebord 128 ou 228 s'étend entre le bord d'attaque (120 ou 220) et le bord de fuite (122 ou 222) ;
- le rebord 128 ou 228 s'étend le long d'au moins la paroi d'extrados (118 ou 218).

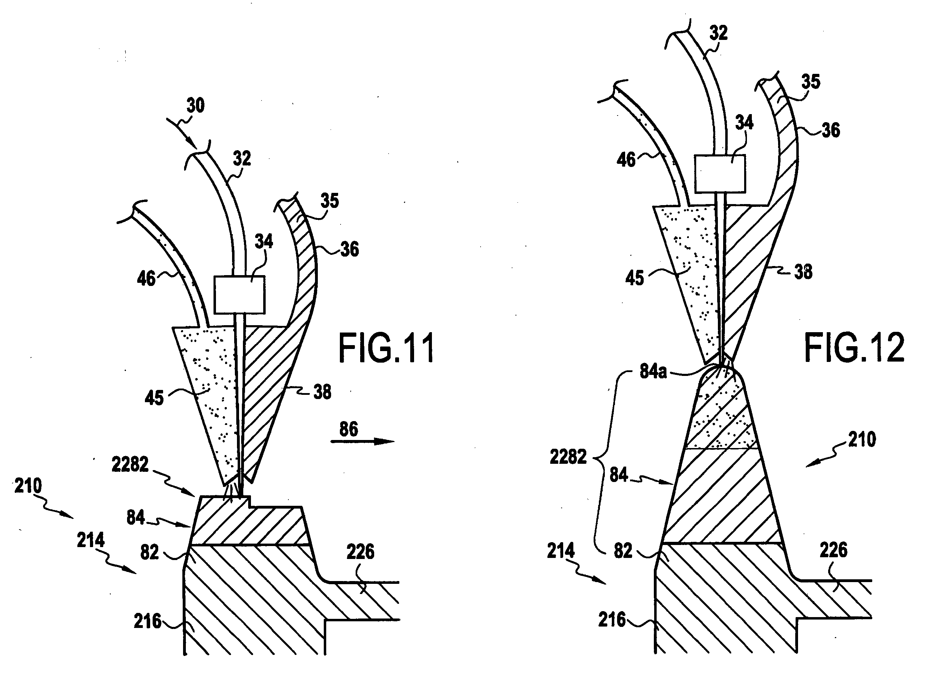

À titre d'exemple, un mode de réalisation du procédé conforme à la présente invention va maintenant être décrit en relation avec les figures 11 à 13 formant des vues partielles en coupe pour un rebord d'intrados 2282 tel que celui de la figure 6.

En section transversale par rapport aux parois d'intrados 216 et d'extrados 218, le profil extérieur du rebord 2282 présente, comme il apparaît sur la figure 12, sensiblement une forme de V inversé ou de U inversé avec les branches du U inclinées en direction du sommet du rebord 2282.

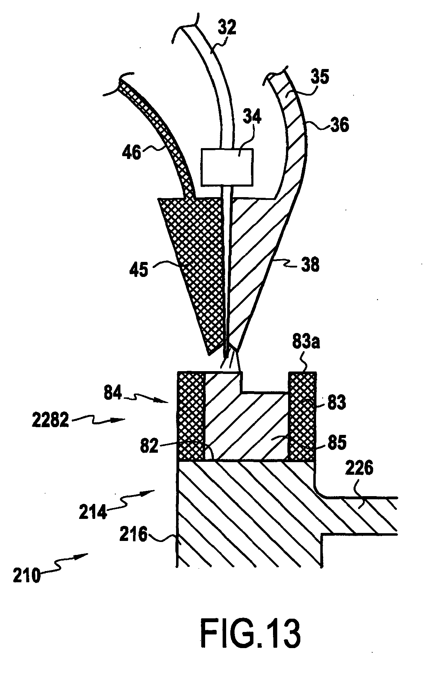

En alternative, comme il apparaît sur la figure 13, le rebord 2282 est prévu avec un profil en section transversale en forme de U inversé, avec les branches du U parallèles entre elles.

Cependant, comme il a déjà été exposé précédemment, selon les techniques de l'art antérieur, le rebord 2282 est usiné directement dans l'aube 210 en sortie de fonderie selon la forme rappelée ci-dessus. Ensuite, on peut, le cas échéant, revêtir ce rebord 2282 par un dépôt réalisé par projection thermique afin de renforcer ses propriétés de résistance à l'abrasion.

Au contraire, selon la présente invention, l'extrémité libre 214 de l'aube 210 issue de fonderie a seulement été usinée afin de réaliser une base 82 faisant saillie de la surface supérieure de la paroi de fond 226 de l'extrémité libre 214 de l'aube 210 au plus de quelques millimètres, et ceci pour amorcer le début de la forme en saillie du rebord 2282.

Ensuite, on utilise, pour la fabrication du reste du rebord 2282, à savoir son extrémité ou pointe 14, un appareillage (non entièrement représenté) permettant de réaliser une projection laser.

Cet appareillage comporte les parties suivantes:
- un système permettant de saisir l'aube 210 et de la déplacer, notamment en rotation et en translation;
- une source laser (CO2 ou YAG) 30 avec un système de transmission du faisceau laser 32 par réflexion sur des miroirs ou par une fibre optique, jusqu'à une tête optique 34 ;
- la tête optique 34 présente une distance focale correspondant à la distance entre cette dernière et la surface à revêtir, cette tête optique 34 est solidaire d'un dispositif de positionnement capable de la placer de façon à ce que le point focal du faisceau puisse balayer tous les points d'une section droite de la surface à revêtir, ou du volume à construire ;
- au moins une source d'un premier matériau en poudre 35 comportant un distributeur et un doseur de poudre ainsi que le tuyau d'alimentation 36 de cette poudre jusqu'à la buse 38.

Dans le cas représenté, on dispose également d'une source d'un deuxième matériau en poudre 45 reliée à la buse 38 par un tuyau d'alimentation 46 correspondant.

Ainsi, on comprend que de préférence, pendant l'étape b) on fournit une première source d'un premier matériau en poudre 35 et une deuxième source d'un deuxième matériau en poudre 45, ladite première source et ladite deuxième source étant reliées à la buse de projection 38.

Dans le cas représenté schématiquement sur les figures 11 à 13, la tête optique 34 et la buse 38 forment un même ensemble, c'est-à-dire que la tête optique 34 et la buse 38 de projection sont solidaires l'une de l'autre dans un même ensemble de projection dont la position est réglable par rapport à l'aube 210.

Cependant la buse 38 peut également être située séparément à côté du faisceau laser en étant supportée par un dispositif de positionnement qui lui est propre afin de lui permettre de suivre les mouvements du point de focalisation du faisceau laser.

En relation avec les figures 11 à 13, il faut comprendre que la construction de la pointe 84 du rebord 2282 s'effectue couche par couche jusqu'à l'extrémité libre de la pointe 84.

Pour chaque couche devant être formée, on peut déposer la matière point à point selon différentes configurations.

En particulier, comme il est illustré sur la figure 11, on peut prévoir de réaliser côte à côte des lanières de matières orientées selon la direction transversale aux parois d'extrados et d'intrados 216, en déplaçant, pour chaque lanière, la tête optique 34 et l'aube 210 l'une par rapport à l'autre (flèche 86 de la figure 11). Ensuite, on déplace la tête optique 34 et l'aube 210 l'une par rapport à l'autre en direction longitudinale pour débuter une autre lanière, et ceci jusqu'à la fin de la formation de la nouvelle couche de matière.

Ensuite on reprend les étapes pour une nouvelle couche de matière plus étroite, jusqu'à l'extrémité libre 84a de la pointe 84 (figure 12).

Dans le cas illustré sur les figures 11 et 12, les premières couches sont réalisées uniquement avec le premier matériau 35, puis les dernières couches de la pointe 84 proviennent du mélange ente le premier matériau 35 et le deuxième matériau 45 qui peut être constitué de particules abrasives.

Dans ce cas, pendant l'étape e) on active simultanément la première source (35) et la deuxième source (45) de matériau en poudre de sorte que la buse (38) projette un mélange des premier et deuxième matériaux en poudre 35 et 45.

Alternativement, on peut prévoir une composition de matière de la pointe 84 variant progressivement, avec de plus en plus de deuxième matériau 45 mélangé au premier matériau 35 au fur et à mesure que l'on se rapproche de l'extrémité libre 84a de la pointe du rebord 2282.

Dans ce cas, on comprend qu'en général, le rebord 2282 est formé d'une base (82) surmontée d'une pointe 84 (en forme de V ou de U inversé) dont la composition varie depuis son extrémité libre 84a.

Il faut noter que la présente invention recouvre également le cas dans lequel aucune base de rebord 82 n'est formée au préalable par l'étape de fonderie de l'aube 210, la réalisation de toute la hauteur du rebord étant effectuée par construction comme il a été décrit ci-dessus, la base de rebord se réduisant dans ce cas (situation non représentée) à une portion de la surface radialement extérieure de l'extrémité libre 214, ce qui correspond, dans le cas de l'aube du deuxième type à une portion de la surface extérieure de la paroi de fond 226.

Egalement, sur la figure 13, on illustre une autre procédure possible du procédé de formation du rebord 2282 selon la présente invention.

Ici, on réalise en premier lieu par fusion du deuxième matériau en poudre 45 deux cordons annulaires 83a le long des deux bords longitudinaux du sommet de la base 82 de rebord (ou de la couche réalisée précédemment), puis on remplit par apport du premier matériau en poudre 35 dans le bain de fusion localisé engendré par le faisceau laser, l'espace en forme de cuvette formé entre ces deux cordons annulaires 83a, ce qui permet de construire une zone centrale qui va constituer au final l'âme 85 du rebord 2282.

De cette façon, couche par couche, les cordons annulaires 83a réalisés avec le deuxième matériau en poudre 45 forment un revêtement 83 et les zones centrales remplies du premier matériau en poudre 35 forment l'âme 85 du rebord 2282.

De préférence, on s'arrange pour que le premier matériau en poudre 35 est identique à celui constituant l'aube et/ ou que le deuxième matériau en poudre 45 est plus dur que le premier matériau 35.

De cette façon, on obtiendra un revêtement 83 plus dur que l'âme 85 du rebord 2282.

Par exemple, on peut avoir une aube 210 en alliage de titane, et l'âme du rebord 2282 également en alliage de titane et un revêtement 83 dans un matériau dur et abrasif, ou bien un rebord entièrement en un matériau dur et abrasif. Comme matériau dur et abrasif, on choisit notamment parmi les métaux résistant à l'oxydation à chaud tels qu'un alliage de type MCrAlY (M étant un métal choisi parmi le nickel, le cobalt, le fer ou un mélange de ces métaux).

On comprend donc que selon le procédé de la figure 13, chaque couche (sauf la dernière) formant le rebord 2282 résulte des deux sous-étapes suivantes :
- on forme à la surface de la base de rebord 82 deux cordons annulaires 83a avec le deuxième matériau en poudre 45 (en variante on peut prévoir un mélange dudit premier matériau 35 et dudit deuxième matériau 45) par le fait qu'au cours de l'étape précédente, la tête optique 34 et la buse 38 sont décalées légèrement en direction longitudinale qui s'étend entre le bord d'attaque 220 et le bord de fuite 222 par rapport à la surépaisseur localisée obtenue précédemment, et
- on remplit la zone 85 située entre les deux cordons 83a avec le premier matériau en poudre 35.

La réalisation de chaque cordon annulaire 83a s'effectue donc en réalisant en continu le dépôt par projection laser en effectuant un déplacement longitudinal de l'aube 210, cette direction longitudinale s'étendant entre le bord d'attaque 220 et le bord de fuite 222.

Le remplissage de la cuvette délimitée entre les deux cordons 83a avec le premier matériau en poudre 35 peut être réalisé selon plusieurs possibilités parmi lesquelles :
- soit par un décalage longitudinal formant petit à petit un autre cordon parallèle aux cordons 83a réalisés dans le deuxième matériau 45, puis un décalage transversal pour former un nouveau cordon annulaire,
- soit par un décalage transversal (direction de la flèche 86 de la figure 11) pour remplir la zone entre les deux cordons 83a selon une ligne transversale et par un décalage longitudinal avant de former une nouvelle ligne transversale en sens inverse pour remplir l'espace entre les deux cordons 83a par formation de lanières de matières successives.

La dernière couche du rebord 2282 sera formée par la même matière que les cordons 83a, en particulier avec le deuxième matériau 45, plus dur que le premier matériau 35.

Dans ce cas illustré sur la figure 13, le rebord 2282 est formé d'une base 82 surmontée d'une portion ou pointe 84 en forme de U inversé composée d'une âme 85 réalisée un premier matériau 35, et d'un revêtement 83 recouvrant toute l'âme 85 et réalisé dans un deuxième matériau 45 plus dure que celui de l'âme 85.

Également, avec le même appareillage que celui présenté en relation avec les figures 11 à 13, on peut envisager de réaliser, conformément à l'invention, la construction de la pointe 14 du rebord 2282 en modifiant progressivement la composition du matériau depuis la surface extérieure formant le revêtement 83 vers l'âme 85 du rebord 2282 en faisant varier progressivement la proportion entre les premier et deuxième matériaux en poudre 35 et 45.

On comprend que le procédé proposé selon la présente invention évite d'une part de réaliser un usinage délicat et d'autre part, lorsqu'on utilise deux matériaux différents entre l'âme et la surface, d'effectuer un revêtement par un procédé de projection thermique qui ne peut pas être réalisé correctement dans certaines configurations géométriques.

En outre, du fait de la simplicité de réalisation du dépôt de matière par projection laser, on peut envisager de réaliser des revêtements abrasifs dans des situations où cela n'était pas mis en oeuvre auparavant.

Parmi les matériaux pouvant être employés, on utilise de préférence pour l'âme 85 un matériau en poudre métallique de même composition que l'aube 210, à savoir un alliage titane ou un alliage à base nickel et pour le revêtement 83, on utilise de préférence des matériaux durs et abrasifs. En particulier on choisit parmi les métaux résistant à l'oxydation à chaud tels qu'un alliage de type MCrAlY (M étant un métal choisi parmi le nickel, le cobalt, le fer ou un mélange de ces métaux) ou un alliage à base de cobalt, chrome tungstène tel que le Stellite (marque déposée). En outre, on peut utiliser comme deuxième matériau des particules abrasives telles que des céramiques comme le dioxyde de titane (TiO2), l'alumine (ALO2), la zircone (ZrO2) ou un mélange réalisé à partir de l'une d'entre elles, ou encore SiC enrobé de AlN ou Al2O3.

Il faut noter que les canaux de refroidissement 232 reliant le passage de refroidissement interne 224 et la face extérieure de la paroi d'intrados 216, ces canaux de refroidissement 232 étant inclinés par rapport à la paroi d'intrados 216, sont percés à l'intérieur même du rebord 2282, de la paroi d'intrados 216 et de l'éventuelle partie saillante 234, et donc après leur construction par projection laser.

Il faut noter que la construction qui vient d'être décrite peut s'appliquer non seulement aux rebords 128, 228 mais aussi à tout ou partie de la partie saillante 234 de la figure 8.

## Revendications

1. Procédé de réalisation d'au moins un rebord (128 ; 228) situé à l'extrémité libre (114 ; 214) d'une aube (110; 210) de rotor d'un moteur à turbine à gaz, comportant les étapes suivantes :
a) on fournit une aube (110; 210) présentant à son extrémité libre au moins une base (82) de rebord (128 ; 228),
b) on fournit une buse (38) de projection apte à se déplacer par rapport à ladite aube (110; 210), et une première source (35) d'un premier matériau en poudre et une deuxième source (45) d'un deuxième matériau en poudre, ladite première source (35) et ladite deuxième source (45) étant reliées à la buse (38) de projection,
c) on fournit une source laser reliée à une tête optique (34) apte à se déplacer par rapport à ladite aube (110; 210) pour focaliser le faisceau laser sur un point de la surface de ladite base (82) de rebord (128 ; 228),
d) on règle la tête optique (34) et la buse (38) sur un même point de la surface du sommet de la base (82) de rebord (128 ; 228),
e) on active la source laser et les sources (35;45) de matériau en poudre, ce par quoi on forme un bain de fusion localisé au niveau dudit point, dans lequel est injecté le matériau en poudre d'où il en résulte la formation d'une surépaisseur localisée ;
f) on règle la tête optique (34) et la buse (38) sur un autre point de la surface du sommet de la base (82) adjacent à ladite surépaisseur localisée et on retourne à l'étape e) jusqu'à la formation d'une couche sur sensiblement toute la largeur du sommet de la base (82) ;
g) on construit au moins une portion du dit rebord (128 ; 228) par le dépôt successif de couches sur le sommet de la base (82), chaque couche résultant de la réalisation des étapes d) à f) et des sous-étapes suivantes :
g1) on forme à la surface de la base (82) de rebord (128 ; 228) deux cordons annulaires (83a) avec le deuxième matériau en poudre (45) ou un mélange dudit premier matériau (35) et dudit deuxième matériau (45) par le fait qu'au cours de l'étape f) la tête optique (34) et la buse (38) sont décalées, en direction longitudinale qui s'étend entre le bord d'attaque (120 ; 220) et le bord de fuite (122 ; 222), par rapport à la surépaisseur localisée obtenue précédemment, et
g2) on remplit une zone (85) située entre les deux cordons annulaires (83a) avec le premier matériau en poudre (35).

2. Procédé selon la revendication précédente, **caractérisé en ce que** l'on réalise les étapes d) à f) tant que toute la surface du sommet de la base (82) de rebord (128 ; 228) n'est pas revêtue d'une couche et **en ce que** pendant l'étape g) on construit le rebord (128 ; 228) par le dépôt successif de couches sur toute la surface du sommet de la base (82) de rebord (128 ; 228), chaque couche résultant de la réalisation des étapes d) à f).

3. Procédé selon la revendication 1 ou 2, **caractérisé en ce que** pendant l'étape f), on parcourt la surface du sommet de la base (82) de rebord (128 ; 228) selon une direction transversale à la paroi d'intrados (116 ; 216) et/ou d'extrados (118 ; 218) avant de se décaler en direction longitudinale qui s'étend entre le bord d'attaque (120 ; 220) et le bord de fuite (122 ; 222).

4. Procédé selon l'une quelconque des revendications précédentes, **caractérisé en ce que** au cours de l'étape f) la source laser et les sources (35;45) de matériau en poudre restent activées.

5. Procédé selon la revendication précédente, **caractérisé en ce que** le deuxième matériau (45) est plus dur que le premier matériau (35).

6. Procédé selon l'une des revendications 1 à 5, **caractérisé en ce que** le premier matériau (35) est identique à celui constituant l'aube (110; 210).

7. Procédé selon l'une quelconque des revendications 1 à 6, **caractérisé en ce que** pendant l'étape e) on active simultanément la première source (35) et la deuxième source (45) de matériau en poudre de sorte que la buse (38) projette un mélange des matériaux en poudre.

8. Procédé selon l'une quelconque des revendications précédentes, **caractérisé en ce que** la tête optique (34) et la buse (38) de projection sont solidaires l'une de l'autre dans un même ensemble de projection dont la position est réglable par rapport à l'aube (110; 210).

9. Procédé selon l'une quelconque des revendications précédentes, **caractérisé en ce que** la base (82) de rebord (128 ; 228) est placée dans le prolongement radial d'au moins la paroi d'extrados (118 ; 218).

10. Aube (110; 210) de rotor d'un moteur à turbine à gaz comportant au moins un rebord (128 ; 228) situé à l'extrémité libre (114 ; 214), **caractérisée en ce que** ledit rebord (128 ; 228) est obtenu par le procédé selon l'une quelconque des revendications précédentes.

11. Aube (110; 210) selon la revendication 10, **caractérisée en ce que** ledit rebord (2282) est formé d'une base (82) surmontée d'une portion (84) composée d'une âme (85) réalisée dans un premier matériau, et d'un revêtement (83) recouvrant toute l'âme (85) et réalisé dans un deuxième matériau plus dur que celui de l'âme (85).

12. Aube (110; 210) selon la revendication 10, **caractérisée en ce que** ledit rebord (2282) est formé d'une base (82) surmontée d'une portion (84) dont la composition varie depuis son extrémité libre (84a).

13. Aube (110; 210) selon l'une quelconque des revendications 10 à 12, **caractérisée en ce que** ledit rebord (128 ; 228) s'étend entre le bord d'attaque (120 ou 220) et le bord de fuite (122 ou 222)

14. Aube (110; 210) selon l'une quelconque des revendications 10 à 13, **caractérisée en ce que** ledit rebord (128 ; 228) s'étend le long d'au moins la paroi d'extrados (118 ou 218).

15. Aube (110) selon l'une quelconque des revendications 10 à 14, **caractérisée en ce qu'**elle comprend plusieurs rebords (1281, 1282) s'étendant entre le bord d'attaque (120) et le bord de fuite (122) et parallèlement entre eux.

16. Aube (210) selon l'une quelconque des revendications 10 à 14, **caractérisée en ce que** l'aube est creuse et comprend un passage de refroidissement interne (224), une cavité (230) ouverte située à l'extrémité libre (214) de l'aube (210), et une paroi de fond (226) s'étendant sur toute l'extrémité (214) de l'aube, en séparant ledit passage de refroidissement interne (224) de la cavité ouverte (230), ladite paroi de fond (226) présentant ladite base (82) de rebord (228).

17. Aube (210) selon la revendication 16, **caractérisée en ce qu'**elle comporte en outre des canaux de refroidissement (232) reliant ledit passage de refroidissement interne (224) et la face extérieure de la paroi d'intrados (216), lesdits canaux de refroidissement (232) étant inclinés par rapport à la paroi d'intrados (216).

18. Turbomachine comprenant une aube (110; 210) de rotor selon l'une quelconque des revendications 10 à 17.

## Patentansprüche

1. Verfahren zur Herstellung wenigstens einer Randleiste (128; 228), die sich an dem freien Ende (114; 214) einer Laufschaufel (110; 210) eines Gasturbinentriebwerks befindet, umfassend die folgenden Schritte:
a) es wird eine Schaufel (110; 210) bereitgestellt, die an ihrem freien Ende wenigstens eine Basis (82) der Randleiste (128; 228) aufweist,
b) es wird eine Spritzdüse (38), die geeignet ist, sich gegenüber der Schaufel (110; 210) zu bewegen, sowie eine erste Quelle (35) eines ersten pulverförmigen Materials und eine zweite Quelle (45) eines zweiten pulverförmigen Materials bereitgestellt, wobei die erste Quelle (35) und die zweite Quelle (45) mit der Spritzdüse (38) verbunden sind,
c) es wird eine Laserquelle bereitgestellt, die mit einem optischen Kopf (34) verbunden ist, welcher geeignet ist, sich gegenüber der Schaufel (110; 210) zu bewegen, um den Laserstrahl auf eine Stelle der Oberfläche der Basis (82) der Randleiste (128; 228) zu fokussieren,
d) der optische Kopf (34) und die Düse (38) werden auf eine gleiche Stelle der Oberfläche des Scheitels der Basis (82) der Randleiste (128; 228) eingestellt,
e) die Laserquelle und die Quellen (35; 45) pulverförmigen Materials werden aktiviert, wodurch ein auf den Bereich der genannten Stelle begrenztes Schmelzbad gebildet wird, in das das pulverförmige Material eingespritzt wird, woraus die Bildung einer örtlich begrenzten Überdicke resultiert,
f) der optische Kopf (34) und die Düse (38) werden auf eine weitere Stelle der Oberfläche des Scheitels der Basis (82) eingestellt, die der örtlich begrenzten Überdicke benachbart ist, und man kehrt zu Schritt e) bis zur Bildung einer Schicht über im Wesentlichen die gesamte Breite des Scheitels der Basis (82) zurück;
g) es wird wenigstens ein Abschnitt der Randleiste (128; 228) durch das sukzessive Abscheiden von Schichten auf dem Scheitel der Basis (82) hergestellt, wobei jede Schicht aus der Durchführung der Schritte d) bis f) sowie der folgenden Teilschritte resultiert:
g1) an der Oberfläche der Basis (82) der Randleiste (128; 228) werden zwei ringförmige Wülste (83a) mit dem zweiten pulverförmigen Material (45) oder einer Mischung aus dem ersten Material (35) und dem zweiten Material (45) dadurch ausgebildet, dass im Laufe des Schrittes f) der optische Kopf (34) und die Düse (38) in Längsrichtung, die zwischen der Vorderkante (120; 220) und der Hinterkante (122; 222) verläuft, gegenüber der zuvor erhaltenen örtlich begrenzten Überdicke versetzt werden, und
g2) ein zwischen den beiden ringförmigen Wülsten (83a) befindlicher Bereich (85) wird mit dem ersten pulverförmigen Material (35) gefüllt.

2. Verfahren nach dem vorhergehenden Anspruch, **dadurch gekennzeichnet, dass** die Schritte d) bis f) solange durchgeführt werden, wie die gesamte Oberfläche des Scheitels der Basis (82) der Randleiste (128; 228) nicht mit einer Schicht überzogen ist, und dass während des Schrittes g) die Randleiste (128; 228) durch das sukzessive Abscheiden von Schichten auf der gesamten Oberfläche des Scheitels der Basis (82) der Randleiste (128; 228) hergestellt wird, wobei jede Schicht aus der Durchführung der Schritte d) bis f) resultiert.

3. Verfahren nach Anspruch 1 oder 2, **dadurch gekennzeichnet, dass** während des Schrittes f) die Oberfläche des Scheitels der Basis (82) der Randleiste (128; 228) in einer Richtung quer zu der vorderseitigen Wand (116; 216) und/oder rückseitigen Wand (118; 218) abgeschritten wird, bevor man in Längsrichtung, die zwischen der Vorderkante (120; 220) und der Hinterkante (122; 222) verläuft, einen Platz weiterrückt.

4. Verfahren nach einem der vorhergehenden Ansprüche, **dadurch gekennzeichnet, dass** im Laufe des Schrittes f) die Laserquelle und die Quellen (35; 45) pulverförmigen Materials aktiviert bleiben.

5. Verfahren nach dem vorhergehenden Anspruch, **dadurch gekennzeichnet, dass** das zweite Material (45) härter als das erste Material (35) ist.

6. Verfahren nach einem der Ansprüche 1 bis 5, **dadurch gekennzeichnet, dass** das erste Material (35) mit dem die Schaufel (110; 210) bildenden identisch ist.

7. Verfahren nach einem der Ansprüche 1 bis 6, **dadurch gekennzeichnet, dass** während des Schrittes e) die erste Quelle (35) und die zweite Quelle (45) pulverförmigen Materials gleichzeitig aktiviert werden, so dass die Düse (38) ein Gemisch aus den pulverförmigen Materialien herausspritzt.

8. Verfahren nach einem der vorhergehenden Ansprüche, **dadurch gekennzeichnet, dass** der optische Kopf (34) und die Spritzdüse (38) in einer gleichen Spritzanordnung, deren Position gegenüber der Schaufel (110; 210) einstellbar ist, fest miteinander verbunden sind.

9. Verfahren nach einem der vorhergehenden Ansprüche, **dadurch gekennzeichnet, dass** die Basis (82) der Randleiste (128; 228) in der radialen Verlängerung wenigstens der rückseitigen Wand (118; 218) gelegen ist.

10. Laufschaufel (110; 210) eines Gasturbinentriebwerks, umfassend wenigstens eine an dem freien Ende (114; 214) befindliche Randleiste (128; 228), **dadurch gekennzeichnet, dass** die Randleiste (128; 228) durch das Verfahren nach einem der vorhergehenden Ansprüche erhalten wird.

11. Schaufel (110; 210) nach Anspruch 10, **dadurch gekennzeichnet, dass** die Randleiste (2282) von einer Basis (82) gebildet ist, auf der ein Abschnitt (84) angeordnet ist, der aus einem aus einem ersten Material ausgebildeten Kern (85) und aus einer Beschichtung (83) besteht, die den gesamten Kern (85) überzieht und aus einem zweiten Material, welches härter als das des Kerns (85) ist, ausgebildet ist.

12. Schaufel (110; 210) nach Anspruch 10, **dadurch gekennzeichnet, dass** die Randleiste (2282) von einer Basis (82) gebildet ist, auf der ein Abschnitt (84) angeordnet ist, dessen Zusammensetzung von seinem freien Ende (84a) aus variiert.

13. Schaufel (110; 210) nach einem der Ansprüche 10 bis 12, **dadurch gekennzeichnet, dass** die Randleiste (128; 228) zwischen der Vorderkante (120 oder 220) und der Hinterkante (122 oder 222) verläuft.

14. Schaufel (110; 210) nach einem der Ansprüche 10 bis 13, **dadurch gekennzeichnet, dass** die Randleiste (128; 228) entlang wenigstens der rückseitigen Wand (118 oder 218) verläuft.

15. Schaufel (110) nach einem der Ansprüche 10 bis 14, **dadurch gekennzeichnet, dass** sie mehrere Randleisten (1281, 1282) umfasst, die zwischen der Vorderkante (120) und der Hinterkante (122) sowie parallel zueinander verlaufen.

16. Schaufel (210) nach einem der Ansprüche 10 bis 14, **dadurch gekennzeichnet, dass** die Schaufel hohl ist und einen inneren Kühldurchgang (224), einen an dem freien Ende (214) der Schaufel (210) gelegenen offenen Hohlraum (230) und eine Bodenwand (226), die unter Trennung des inneren Kühldurchgangs (224) von dem offenen Hohlraum (230) über das gesamte Ende (214) der Schaufel verläuft, umfasst, wobei die Bodenwand (226) die Basis (82) der Randleiste (228) aufweist.

17. Schaufel (210) nach Anspruch 16, **dadurch gekennzeichnet, dass** sie ferner Kühlkanäle (232) umfasst, die den inneren Kühldurchgang (224) und die Außenseite der vorderseitigen Wand (216) verbinden, wobei die Kühlkanäle (232) gegenüber der vorderseitigen Wand (216) geneigt sind.

18. Turbomaschine, die eine Laufschaufel (110; 210) nach einem der Ansprüche 10 bis 17 umfasst.

## Claims

1. A method of making at least one rim (128; 228) situated at the free end (114; 214) of a rotor blade (110; 210) for a gas turbine engine, the method comprising the following steps:
a) providing a blade (110; 210) presenting at least one base (82) for a rim (128; 228) at its free end;
b) providing a spray nozzle (38) suitable for moving relative to said blade (110; 210), and a first source (35) of a first powder material, and a second source (45) of a second powder material, said first source (35) and said second source (45) being connected to the spray nozzle (38);
c) providing a laser source connected to an optical head (34) suitable for moving relative to said blade (110; 210) in order to focus the laser beam on a point of the surface of said base (82) for a rim (128; 228);
d) aiming the optical head (34) and the nozzle (38) on a common point of the surface of the top of the base (82) for the rim (128; 228);
e) activating the laser source and the sources (35; 45) of powder material so as to form a localized melt in the vicinity of said point, into which the powder material is injected, thereby forming a localized region of extra thickness;
f) aiming the optical head (34) and the nozzle (38) on another point of the surface of the top of the base (82) adjacent to said localized region of extra thickness and returning to step e) until a layer has been formed over substantially the entire width of the top of the base (82); and
g) building at least a portion of said rim (128; 228) by depositing successive layers on the top of the base (82), each layer resulting from performing steps d) to f) and the following sub-steps:
g1) forming two annular beads (83a) on the surface of the base (82) for the rim (128; 228), using the second powder material (45) or a mixture of said second material (45) and said first material (35) by causing the optical head (34) and the nozzle (38) to be offset during step f) in a longitudinal direction extending between the leading edge (120; 220) and the trailing edge (122; 222) relative to the previously-obtained localized region of extra thickness; and
g2) filling a zone (85) situated between the two annular beads (83a) with the first powder material (35).

2. A method according to the preceding claim, **characterized in that** steps d) to f) are performed so long as the top of the base (82) for the rim (128; 228) has not been coated in a layer, and wherein, during step g), the rim (128; 228) is built up by depositing successive layers over the entire surface of the top of the base (82) of the rim (128; 228), each layer being the result of performing steps d) to f).

3. A method according to claim 1 or 2, **characterized in that**, during step f), the surface of the top of the base (82) for the rim (128; 228) is followed in a direction extending transversely to the pressure-side wall (116; 216) and/or the suction-side wall (118; 218) prior to offsetting in the longitudinal direction that extends between the leading edge (120; 220) and the trailing edge (122; 222).

4. A method according to any one of the preceding claims, **characterized in that**, during step f), the laser source and the sources (35; 45) of powder material remain activated.

5. A method according to the preceding claim, **characterized in that** the second material (45) is harder than the first material (35).

6. A method according to any of claims 1 to 5, **characterized in that** the first material (35) is identical to the material constituting the blade (110; 210).

7. A method according to any one of claims 1 to 6, **characterized in that**, during step e), both the first source (35) and the second source (45) of powder material are activated simultaneously so that the nozzle (38) projects a mixture of the powder materials.

8. A method according to any one of the preceding claims, **characterized in that** the optical head (34) and the spray nozzle (38) are secured to each other in a common projection assembly of position that is adjustable relative to the blade (110; 210).

9. A method according to any one of the preceding claims, **characterized in that** the base (82) for the rim is placed radially extending at least the pressure-side wall (118; 218).

10. A rotor blade (110; 210) for a gas turbine engine, the blade including at least one rim (128; 228) situated at the free end (114; 214), **characterized in that** said rim (128; 228) is obtained by the method according to any one of the preceding claims.

11. A blade (110; 210) according to claim 10, **characterized in that** said rim (2282) is formed by a base (82) surmounted by a portion (84) made up of a core (85) made of a first material, and a coating (83 )covering the entire core (85) and made of a second material that is harder than the material of the core (85).

12. A blade (110; 210) according to claim 10, **characterized in that** said rim (2282) is formed by a base (82) surmounted by a portion (84) of composition that varies going away from its free end (84a).

13. A blade (110, 210) according to any one of claims 10 to 12, **characterized in that** said rim (128; 228) extends between the leading edge (120 or 220) and the trailing edge.

14. A blade (110; 210) according to any one of claims 10 to 13, **characterized in that** said rim (128; 228) extends along at least the suction-side wall (118 or 218).

15. A blade (110) according to any one of claims 10 to 14, **characterized in that** it comprises a plurality of rims (1281, 1282) extending between the leading edge (120) and the trailing edge (122), and extending parallel to one another.

16. A blade (210) according to any one of claims 10 to 14, **characterized in that** the blade is hollow and includes an internal cooling passage (224), an open cavity (230) situated at the free end (214) of the blade (210), and an end wall (226) extending over the entire end (214) of the blade, separating said internal cooling passage (224) from the open cavity (230), said end wall (226) presenting said base (82) for a rim (228).

17. A blade (210) according to claim 16, **characterized in that** it further comprises cooling channels (232) connecting said internal cooling passage (224) and the outside face of the pressure-side wall (216), said cooling channels (232) being inclined relative to the pressure-side wall (216).

18. A turbomachine including a rotor blade (110; 210) according to any one of claims 10 to 17.
